# EUROPÄISCHE PATENTSCHRIFT

(11) **EP 0 881 791 B1**
(45) Veröffentlichungstag und Bekanntmachung des Hinweises auf die Patenterteilung: **23.02.2005**
(21) Anmeldenummer: 98440087.9
(22) Anmeldetag: 07.05.1998
(51) Int. Cl.: H04B 10/207

(54) **System zur optischen Übertragung von Informationen**
System for optical transmission of information
Système de transmission optique d'informations

(30) Priorität: 12.05.1997 DE 19719425
(43) Veröffentlichungstag der Anmeldung: 02.12.1998
(73) Patentinhaber: ALCATEL, 75008 Paris (FR)
(72) Erfinder: Eyberg, Rudolf, Dr., 70839 Gerlingen (DE); Hägele, Volker, Dr., 73635 Rudersberg (DE)
(74) Vertreter: Schätzle, Albin, Dipl.-Phys.

(56) Entgegenhaltungen:
- EP-A- 0 546 707
- MEISSNER P ET AL: "EXPERIMENTALSYSTEME FUER ZUKUENFTIGE KOHAERENTE OPTISCHE TV-VERTEIL- UND BIDIREKTIONALE KOMMUNIKATIONSSYSTEME" NACHRICHTENTECHNIK ELEKTRONIK, VEB VERLAG TECHNIK. BERLIN, DE, Bd. 42, Nr. 5, 1. September 1992 (1992-09-01), Seiten 171-174, XP000310195 ISSN: 0323-4657

## Beschreibung

Die Erfindung betrifft ein System zur optischen Übertragung von Informationen gemäß dem Oberbegriff des Patentanspruchs 1.

Aus WO 95/05041 ist ein System zur optischen Übertragung von Informationen von einer Unterzentrale über mehrere optische Übertragungsleitungen zu mehreren optischen Netzabschlußeinheiten bekannt. Die Unterzentrale ist über ein passives optisches Verteilnetz aus optischen Übertragungsleitungen und einem optischen Splitter mit den optischen Netzabschlußeinheiten verbunden. In der Unterzentrale werden mehrere elektrische Unterträgersignale zu einem Frequenzmultiplexsignal zusammengefaßt und anschließend elektrisch/optisch umgesetzt. Die Unterträgersignale sind beispielsweise Fernsehsignale, die für alle optischen Netzabschlußeinheiten bestimmt sind und Fernsprechsignale, die jeweils nur für eine optische Netzabschlußeinheit bestimmt sind. Für die Fernsprechsignale ist im Gegensatz zu den Fernsehsignalen lediglich ein kleiner Frequenzbereich reserviert. Sind eine Vielzahl von Endstellen über die optischen Netzabschlußeinheiten mit der Unterzentrale verbunden, so reicht dieser releativ kleine Frequenzbereich nicht aus, um eine genügend große Anzahl von Kanälen für die Vielzahl der Endstellen zur Verfügung zu stellen.

Aus EP 0 546 707 A2 ist ein System zur optischen Übertragung von Informationen von einer Uebertragungsstation über mehrere optische Übertragungsleitungen zu mehreren optischen Netzabschlußeinheiten bekannt, wobei das System mindestens ein Uebertragungsmittel zur optischen Übertragung von weiteren Informationen und mindestens einen optischen Koppler beinhaltet, und wobei die weiteren Informationen eines jeden Uebertragungsmittels jeweils über einen optischen Koppler in eine optische Übertragungsleitung eingespeist werden, die nur mit einem Teil der mehreren optischen Netzabschiußeinheiten verbunden ist,
wobei eine optische Signalverteileinrichtung vorgesehen ist, um die Informationen und die weiteren Informationen zu verknüpfen und sie anschließend gemeinsam zu dem jeweiligen Teil der mehreren optischen Netzabschlußeinheiten zu übertragen, wobei die optische Signalverteileinrichtung mindestens drei optische Koppler beinhaltet, von denen mindestens zwei zwei Eingänge und zwei Ausgänge aufweisen, daß die Informationen einem der mindestens drei optischen Koppler zugeführt werden, der mit zwei der mindestens zwei optischen Koppler mit zwei Eingängen verbunden ist, und wobei die weiteren Informationen mindestens einem der mindestens zwei optischen Koppler mit zwei Eingängen zugeführt werden, um sie mit den Informationen der Uebertragungsstation zu verknüpfen.

Es ist deshalb eine Aufgabe der Erfindung ein System zur optischen Übertragung von Informationen zur Verfügung zu stellen, das flexibler unterschiedliche Informationen zu mehreren optischen Netzabschlußeinheiten übertragen kann.

Diese Aufgabe wird durch die Lehren der Patentansprüche 1 und 11 gelöst. Die Erfindung ist insbesondere dadurch gekennzeichnet, daß das System mehrere Knoten zur optischen Übertragung von weiteren Informationen und mehrere optische Koppler beinhaltet, und daß die weiteren Informationen eines jeden Knotens jeweils über einen Koppler in eine Übertragungsleitung eingespeist werden, die nur mit einem Teil der mehreren optischen Netzabschlußeinheiten verbunden ist. Die Zusammenfassung der Informationen, die beispielsweise Fernsehsignale sind, und der weiteren Informationen, die beispielsweise Fernsprechsignale sind, auf optischem Wege über die optischen Koppler und die Aufteilung der weiteren Informationen auf diejenigen Übertragungsleitungen, die jeweils mit der optischen Netzabschlußeinheit verbunden ist, für die die entsprechenden weiteren Informationen ausschließlich bestimmt sind, optimiert die Ausnutzung der verfügbaren Übertragungskapazität. Ferner wird die Ausbaufähigkeit des Systems unterstützt, da für jede weitere optische Netzabschlußeinheit z.B. lediglich eine zusätzliche optische Übertragungsleitung und ein optischer Splitter benötigt werden.

Vorteilhafte Ausgestaltungen sind den abhängigen Patentansprüchen zu entnehmen.

Im folgenden wird die Erfindung anhand von fünf Ausführungsbeispielen unter Zuhilfenahme der Figuren 1 bis 8 erläutert. Es zeigen :
- Fig. 1: eine schematische Darstellung eines ersten erfindungsgemäßen Systems zur optischen Übertragung von Informationen,
- Fig. 2: eine schematische Darstellung eines zweiten erfindungsgemäßen Systems zur optischen Übertragung von Informationen,
- Fig. 3: eine schematische Darstellung eines dritten erfindungsgemäßen Systems zur optischen Übertragung von Informationen,
- Fig. 4: ein schematisch dargestellter Aufbau eines Ausschnittes der optischen Netzabschlußeinheit aus Fig. 3,
- Fig. 5: eine schematische Darstellung eines vierten erfindungsgemaßen Systems zur optischen Übertragung von Informationen,
- Fig. 6: einen schematisch dargestellten Aufbau einer erfindungsgemäßen optischen Signalverteileinrichtung des Systems aus Fig. 5,
- Fig. 7: einen schematisch dargestellten Aufbau einer weiteren erfindungsgemäßen optischen Signalverteileinrichtung des Systems aus Fig. 5, und
- Fig. 8: eine Ausführungsform einer optischen Schalteinheit der optischen Signalverteileinrichtung aus Fig. 7.

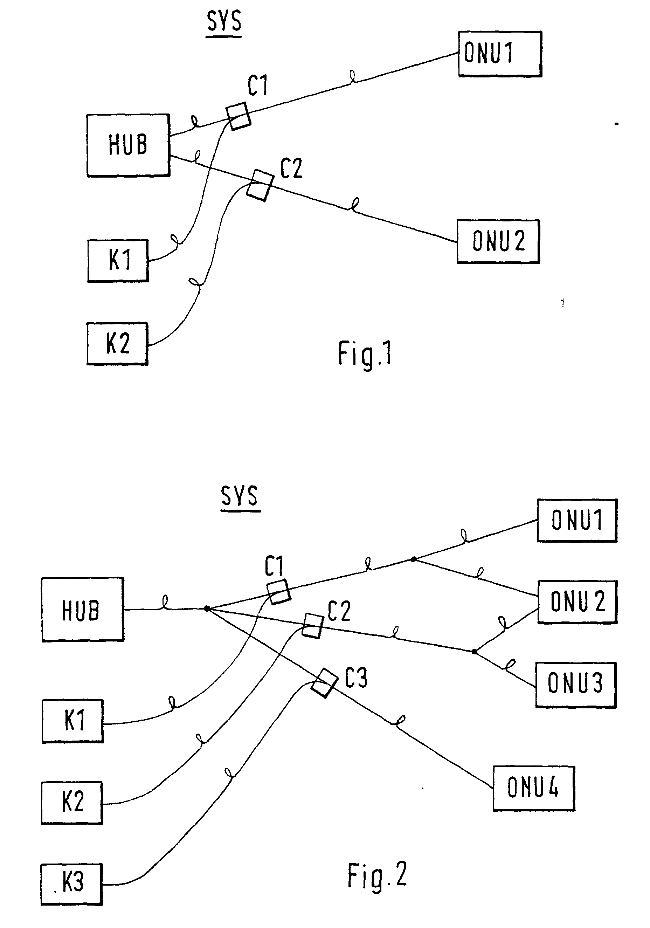

Das erste Ausführungsbeispiel wird nun unter Zuhilfenahme der Fig. 1 erläutert. Fig. 1 zeigt ein erfindungsgemäßes System SYS zur optischen Übertragung von Informationen. Das System SYS beinhaltet eine Unterzentrale HUB, die über eine erste optische Übertragungsleitung mit einer optischen Netzabschlußeinheit ONU1 und über eine zweite optische Übertragungsleitung mit einer optischen Netzabschlußeinheit ONU2 verbunden ist. Von der Unterzentrale wird eine erste Information zur optischen Netzabschlußeinheit ONU1 und eine zweite Information zur optischen Netzabschlußeinheit ONU2 übertragen. Die erste und die zweite Information können identisch sein, z.B. im Falle eines Verteildienstes, wie dem Verteilen von Fernsehsignalen, oder unterschiedlich, z.B. im Falle einer Datenübertragung.

Das System SYS beinhaltet ferner zwei Knoten K1, K2 zur optischen Übertragung von weiteren Informationen. Die weiteren Informationen des Knotens K1, z.B. Fernsprechsignale oder Datensignale, sind ausschließlich für die optische Netzabschlußeinheit ONU1 bestimmt und nicht für die optische Netzabschlußeinheit ONU2. Aus diesem Grund werden die weiteren Informationen des Knotens K1 über eine weitere Übertragungsleitung und einen optischen Koppler C1, der in die erste Übertragungsleitung eingeschleift ist, über einen Teil der ersten Übertragungsleitung zusammen mit den Informationen der Unterzentrale HUB zur optischen Netzabschlußeinheit ONU1 übertragen.

Die weiteren Informationen des Knotens K2, z.B. Fernsprechsignale oder Datensignale, sind ausschließlich für die optische Netzabschlußeinheit ONU2 bestimmt und nicht für die optische Netzabschlußeinheit ONU1. Aus diesem Grund werden die weiteren Informationen des Knotens K2 über eine weitere Übertragungsleitung und einen optischen Koppler C2, der in die zweite Übertragungsleitung eingeschleift ist, über einen Teil der zweiten Übertragungsleitung zusammen mit den Informationen der Unterzentrale HUB zur optischen Netzabschlußeinheit ONU2 übertragen.

Die weiteren Informationen der Knoten K1 und K2 werden somit auf optischem Weg mit den Informationen der Unterzentrale HUB zusammengefaßt und den optischen Netzabschlußeinheiten ONU 1 und ONU2 zugeführt, die beispielsweise jeweils mit einer Gruppe von Endstellen verbunden sind. Auf diese Weise können Gruppen von Endstellen sowohl Verteilinformationen als auch spezielle, ausschließlich für eine jeweilige Gruppe von Endstellen bestimmte Informationen kostengünstig und unter optimaler Ausnutzung der vorhandenen Übertragungskapazität zugeführt werden.

Das zweite Ausführungsbeispiel wird nun weiter unter Zuhilfenahme der Fig. 2 erläutert. Fig. 2 zeigt ein erfindungsgemäßes System SYS zur optischen Übertragung von Informationen. Das System SYS beinhaltet eine Unterzentrale HUB, die über ein passives optisches Übertragungsnetz aus optischen Übertragungsleitungen und drei optischen Splittern mit vier optischen Netzabschlußeinheiten ONU1, ONU2, ONU3, ONU4 verbunden ist. Die optische Netzabschlußeinheit ONU2 ist über zwei unterschiedliche Wege mit der Unterzentrale HUB verbunden. Durch diese Redundanz erhält die optische Netzabschlußeinheit ONU2 die von der Unterzentrale HUB ausgesendeten Informationen doppelt und kann aus ihnen auswählen. Die Einführung von zwei unterschiedlichen Wegen dient u.a. der weiteren Verfügbarkeit einer Verbindung, im Falle eines Ausfalls einer Verbindung.

Das System SYS beinhaltet ferner drei Knoten K1, K2, K3 zur optischen Übertragung von weiteren Informationen, insbesondere von Informationen, die nur für eine oder zwei der vier optischen Netzabschlußeinheiten ONU1, ONU2, ONU3, ONU4 bestimmt sind.

Die weiteren Informationen des Knotens K1 sind für die optischen Netzabschlußeinheiten ONU1 und ONU2 bestimmt. Sie werden über eine zusätzliche optische Übertragungsleitung und einen optischen Koppler C1, der in die optische Übertragungsleitung eingeschleift ist, die über einen optischen Splitter mit den optischen Netzabschlußeinheiten ONU1 und ONU2 verbunden ist, zu den optischen Netzabschlußeinheiten ONU1 und ONU2 übertragen.

Die weiteren Informationen des Knotens K2 sind für die optischen Netzabschlußeinheiten ONU2 und ONU3 bestimmt. Sie werden über eine zusätzliche optische Übertragungsleitung und einen optischen Koppler C2 in die Übertragungsleitung eingespeist, die über einen optischen Splitter mit den optischen Netzabschlußeinheiten ONU2 und ONU3 verbunden ist. Aus diese Weise gelangen die weiteren Informationen des Knotens K2 sowohl zur optischen Netzabschlußeinheit ONU2 als auch zur optischen Netzabschlußeinheit ONU3. Die weiteren Informationen des Knotens K1 und die weiteren Informationen des Knotens K2, die für die optische Netzabschlußeinheit ONU2 bestimmt sind, können dieselben sein, was Redundanz schafft und die weitere Verfügbarkeit einer Verbindung, im Falle eines Ausfalls einer Verbindung bedeutet oder unterschiedliche sein, was zu einer erhöhten Übertragungskapazität führt, beispielsweise die doppelte Übertragungskapazität, verglichen mit den optischen Netzabschlußeinheiten ONU1 und ONU3. Die Aufteilung der verfügbaren Übertragungskanäle auf die optischen Netzabschlußeinheiten ONU1, ONU2 und ONU3 kann auch dynamisch erfolgen, so daß eine an das Verkehrsaufkommen angepaßte Aufteilung während des Betriebs erfolgen kann. Ist die Übertragungskapazität des Knotens K1 beispielsweise 10 Mbit/s so können z.B. 6 Mbit/s für die optischen Netzabschlußeinheit ONU1 genutzt und 4 Mbit/s für die optischen Netzabschlußeinheit ONU2 genutzt werden. Ist die Übertragungskapazität des Knotens K2 beispielsweise auch 10 Mbit/s so können z.B. 6 Mbit/s für die optischen Netzabschlußeinheit ONU3 genutzt und 4 Mbit/s für die optischen Netzabschlußeinheit ONU2 genutzt werden, so daß insgesamt 8 Mbit/s für die optischen Netzabschlußeinheit ONU2 genutzt werden können. Verändert sich nun das Verkehrsaufkommen, so können über Knoten K1 z.B. 5 Mbit/s für die optischen Netzabschlußeinheit ONU1 und 5 Mbit/s für die optischen Netzabschlußeinheit ONU2 genutzt werden sowie über Knoten K2 z.B. 5 Mbit/s für die optischen Netzabschlußeinheit ONU3 und 5 Mbit/s für die optischen Netzabschlußeinheit ONU2 genutzt werden, so daß insgesamt 10 Mbit/s für die optischen Netzabschlußeinheit ONU2 genutzt werden können.

Die weiteren Informationen des Knotens K3 sind ausschließlich für die optische Netzabschlußeinrichtung ONU4 bestimmt. Sie werden über eine zusätzliche optische Übertragungsleitung und einen optischen Koppler C3 in die Übertragungsleitung eingespeist, die direkt mit der optischen Netzabschlußeinrichtungen ONU4 verbunden ist.

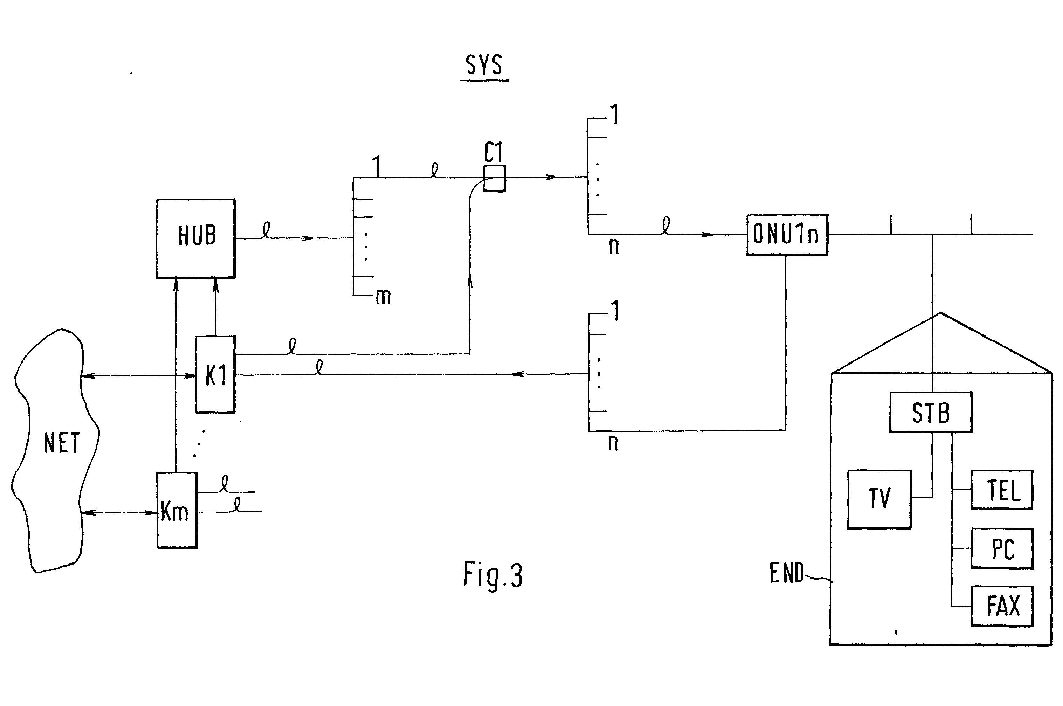

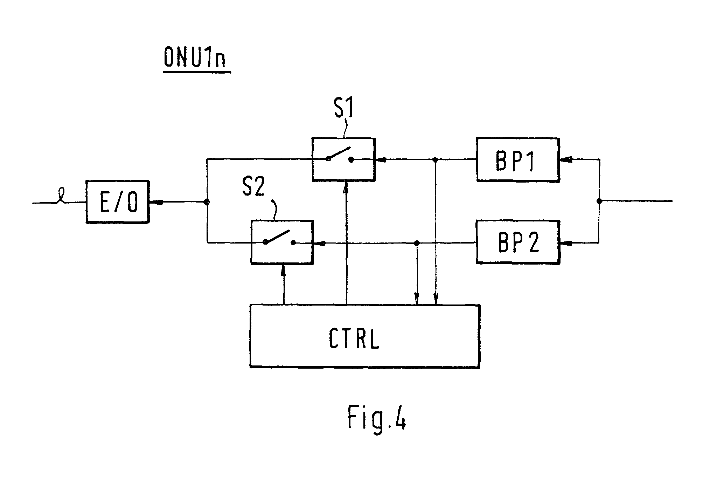

Das dritte Ausführungsbeispiel wird nun weiter unter Zuhilfenahme der Fig. 3 und 4 erläutert. Fig. 3 zeigt ein erfindungsgemäßes System SYS zur optischen Übertragung von Informationen. Das System SYS ist beispielsweise ein hybrides Glasfaser-Koaxialkabel-Zugangssystem, das beispielsweise der Übertragung von analogen und/oder digitalen Fernsehund Videosignalen von einer Unterzentrale HUB zu mehreren Endstellen END sowie der Übertragung von interaktiven Abrufsignalen von mehreren Endstellen END zur Unterzentrale HUB dient. Von den Endstellen END ist beispielhaft eine dargestellt. Das System SYS dient des weiteren der Übertragung von Daten- und/oder Fernsprechsignalen von mehreren Knoten K1, ..., Km zu Gruppen von Endstellen END sowie der Übertragungvon Fernsprech- und/oder Datensignalen von Gruppen von Endstellen END zu den Knoten K1, ..., Km.

Die von der Unterzentrale, z.B. einer Kabelfernsehkopfstation, zu übertragenden Signale werden in der Unterzentrale HUB elektrisch/optisch umgesetzt und über ein passives optisches Verteilnetz aus optischen Übertragungsleitungen, z.B. Glasfaserleitungen und optischen Splittern zu mehreren optischen Netzabschlußeinheiten ONU1n, wovon eine dargestellt ist, übertragen. In jeder optischen Netzabschlußeinheit ONU1 n findet eine optisch/elektrische Umsetzung der empfangenen Signale statt, die anschließend elektrisch über Koaxialkabel zu einer Gruppe von Endstellen END übertragen werden. Die Videosignale sind beispielsweise von Teilnehmern interaktiv ausgewählte Spielfilme, Lernprogramme oder dergleichen.

Die Endstelle END hat ein eigenes Hausnetz, auf das der Teilnehmer Zugriff hat und an das er zahlreiche Endgeräte anschließen kann. Die Endgeräte sind beispielsweise ein über ein Modem angeschlossener Computer PC, ein über eine Set-Top-Box STB angeschlossenes Fernsehgerät TV, ein Telefon TEL oder ein Faxgerät FAX.

Das passive optische Verteilnetz beinhaltet beispielsweise einen 1:m und m 1:n optische Splitter; m und n sind jeweils natürliche Zahlen, z.B. m=10, n=10. Damit sind 100 optische Netzabschlußeinheiten ONU1n mit der Unterzentrale HUB verbindbar.

Die Knoten K1, ..., Km sind jeweils auf zwei Arten mit den entsprechenden optischen Netzabschlußeinheiten ONU1n verbunden. Der Knoten K1 ist beispielsweise über eine zusätzliche optische Übertragungsleitung und einen optischen Koppler C1, der in die erste Übertragungsleitung nach dem 1:m Splitter eingefügt ist, mit den n optischen Netzabschlußeinheiten ONU1n verbunden, die über einen 1:n Splitter mit dieser ersten optischen Übertragungsleitung verbunden sind. Die weiteren Informationen des Knotens K1, z.B. Fernsprechsignale, erreichen also n optische . Netzabschlußeinheiten ONU1 n. An jede optische Netzabschlußeinheit ONU1n ist eine Gruppe von Endstellen END angeschlossen. Jede Gruppe beinhaltet beispielsweise 20 Endstellen END, so daß mit dem Knoten K1 200 Endstellen verbunden sind. Knoten K1 stellt z.B. Fernsprech- oder Bildtelefonverbindungen zu diesen Endstellen END her. Die Übertragung von Informationen von den Endstellen END zum Knoten K1 erfolgt über ein zusätzliches passives optisches Verteilnetz, beispielsweise mit einem optischen n:1 Combiner, wie in Fig. 3 dargestellt, oder über n separate Übertragungsleitungen, die jeweils eine optische Netzabschlußeinheit ONU1n direkt mit dem Knoten K1 verbinden. Je nach der verfügbaren Übertragungskapazität im Rückkanalfrequenzbereich und der Anzahl der Endstellen END ist für das zusätzliche passive optische Vertreilnetz auch eine Mischform aus mehreren optischen Combinern und mehreren direkten Verbindungen möglich. Der Zugriff der Endstellen END erfolgt beispielsweise nach dem sog. CDMA-Verfahren; CDMA = Code Division Multiple Access. Die Knoten K2 bis Km sind vergleichbar dem Knoten K1 mit den zugehörigen optischen Netzabschlußeinheiten und den Gruppen von Endstellen END verbunden. Die Übertragung von Informationen erfolgt entsprechend.

Die Knoten K1, ..., Km sind jeweils über eine optische oder eine elektrische Übertragungsleitung mit der Unterzentrale HUB verbunden. Die Knoten K1, ..., Km beinhalten Mittel zur Aufteilung der von den mit ihnen verbundenen optischen Netzabschlußeinheiten ONU1n empfangenen Informationen und Mittel zur Weiterleitung eines Teils der von den optischen Netzabschlußeinheiten ONU empfangenen Informationen zur Unterzentrale HUB. Beispielsweise enthalten die Informationen der optischen Netzabschlußeinheiten ONU1n interaktive Abrufsignale und Fernsprechsignale. Mit dem ersten Mittel werden die Abrufsignale und die Fernsprechsignal voneinander getrennt, z.B. mittels elektrischen Bandpässen nach einer optisch/elektrischen Umsetzung mit einer Photodiode. Mit dem zweiten Mittel werden die Abrufsignale zur Unterzentrale weitergeleitet, z.B. mittels eines Elektrisch/Optisch-Umsetzers.

Die Knoten K1, ..., Km sind z.B. mit einem Fernsprechnetz NET, z.B. einem diensteintegrierenden digitalen Netz, dem sog. ISDN verbunden. Über jeden Knoten K1, ..., Km werden Fernsprechsignale aus dem ISDN zu wenigstens einer Gruppe von Endstellen END und Fernsprechsignale von wenigstens einer Gruppe von Endstellen END ins ISDN übertragen.

Fig. 4 zeigt einen Ausschnitt aus der optischen Netzabschlußeinheit ONU1 n aus Fig. 3. Der Ausschnitt zeigt ein Zwischenglied, das bei der Übertragung von Informationen von den Endstellen zu den Knoten eingesetzt wird. Das Zwischenglied dient der Unterdrückung von Störungen und beinhaltet zwei Schalter S1, S2, zwei Bandpaßfilter BP1, BP2, eine Steuereinheit CTRL und einen Elektrisch/Optisch-Umsetzer E/O.

Die zwei Schalter S1, S2 dienen dazu, zumindest ein Teil des Frequenzbereichs der zur Informationsübertragung zu dem jeweiligen Knoten K1, ..., Km dient für die Übertragung freizuschalten oder zu sperren wird. Für den Fall, daß in diesem Teil des Frequenzbereichs keine Übertragung stattfinden soll, wird der Frequenzbereich gesperrt.

Die zwei Bandpaßfilter BP1, BP2, alternativ auch Frequenzweichen oder Bandsperren dienen zur Aufteilung des Frequenzbereichs der zur Informationsübertragung zu dem jeweiligen Knoten K1, ..., Km dient. Das Bandpaßfilter BP1 sperrt z.B. alle Frequenzen, außer diejenigen für die interaktiven Signale. Das Bandpaßfilter BP2 sperrt z.B. alle Frequenzen, außer diejenigen für die Fernsprechsignale.

Die Steuereinheit CTRL dient zur Detektion der Signalpegel in den aufgeteilten Frequenzbereichen und zur Ansteuerung der zwei Schalter S1, S2. Die Steuereinheit CTRL beinhaltet dazu beispielsweise einen Amplitudendetektor, der die Amplituden der interaktiven Abrufsignale und der Fernsprechsignale detektiert und jeweils mit einer oberen und einer unteren Schwelle vergleicht. Die obere Schwelle ist ein maximaler Wert, der nicht überschritten werden darf, da es sonst zu Störungen auf der Übertragungsleitung kommt. Die untere Schwelle ist eine minimale Schwelle, die nicht unterschritten werden darf, da das Signal aufgrund der Dämpfung auf der Übertragungsleitung im Knoten nicht mehr detektierbar ist. Die Ansteuerung der zwei Schalter S1 und S2 erfolgt derart, daß für den Fall, daß der entsprechende Signalpegel unter einer vorgegebenen minimalen Schwelle oder überhalb einer vorgegebenen oberen Schwelle liegt, der entsprechende Frequenzbereich gesperrt wird.

Im Elektrisch/Optisch-Umsetzer E/O, der beispielsweise durch eine direkt modulierte Laserdiode realisiert ist, werden alle Signale, die in den von den Schaltern S1 und S2 freigeschalteten Frequenzbereiche liegen, elektrisch/optisch umgesetzt und anschließend zum entsprechenden Knoten übertragen.

In den drei Ausführungsbeispiele werden Informationen über optische Koppler zusammengefaßt und gemeinsam über eine optische Übertragungsleitung übertragen. Die von der Unterzentrale HUB übertragenen Informationen und die von den mehreren Knoten K1, ..., Km übertragenen weiteren Informationen können bei unterschiedlichen Wellenlängen übertragen werden. Dies hat den Vorteil, daß bei der Zusammenfassung der Informationen die Möglichkeit des Auftretens von Interferenzen reduziert wird. Außerdem steht dadurch sowohl für die Unterzentrale HUB als auch für jeden einzelnen Knoten K1, ..., Km ein größerer Frequenzbereich zur Informationsübertragung zur Verfügung, so daß eine höhere Anzahl von Übertragungskandien möglich ist.

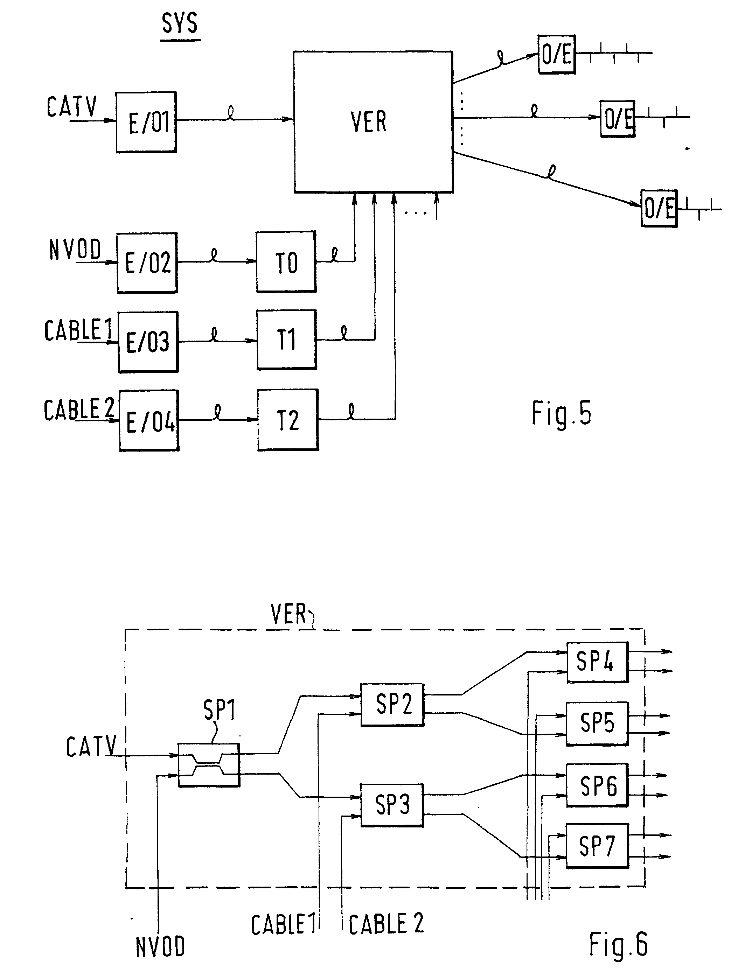

Das vierte Ausführungsbeispiel wird nun unter Zuhilfenahme der Figuren 5 und 6 erläutert. Fig. 5 zeigt ein erfindungsgemäßes System SYS zur optischen Übertragung von Informationen. Das System SYS beinhaltet vier Elektrisch/Optisch-Umsetzer E/O1, E/O2, E/O3, E/O4 zur Umsetzung und Übertragung von vier verschiedenen Informationen. Der Elektrisch/Optisch-Umsetzer E/O1 dient der Umsetzung von elektrischen Fernsehsignalen CATV in optische Signale mit der Wellenlänge λ₁ und deren Übertragung über eine optische Übertragungsleitung zu einer breitbandigen Signalverteileinrichtung VER. In der Signalverteileinrichtung VER werden die Fernsehsignale in mehrere optische Signale aufgesplittet, um sie anschließend über mehrere optische Übertragungsleitungen zu mehreren Optisch/Elektrisch-Umsetzern O/E zu übertragen, die die Rückumsetzung der optischen Signale in die elektrische Fernsehsignale durchführen, damit sie mehreren Endstellen z.B. über Koaxialkabel zugeführt werden können. Das System SYS ist somit u.a. ein Verteilsystem für Kabelfernsehsignale CATV.

Der Elektrisch/Optisch-Umsetzer E/O2 dient der Umsetzung und Übertragung von Near-Video-on-demand Signalen NVOD. Diese sind Videosignale, die in vorgegebenen zeitlichen Abständen wiederholt ausgestrahlt werden und für dessen Ansicht der Teilnehmer eine Gebühr zu entrichten hat. Zur Vermeidung von optischen Interferenzen können sie bei der Wellenlänge λ₂ ≠ λ₁ übertragen werden. Die optischen Near-Video-on-demand Signale NVOD werden über eine optische Übertragungsleitung einem optischen Dämpfungsglied T0 zugeführt. Dieses optische Dämpfungsglied T0 dient zur Anpassung der Signalamplitude der optischen Near-Video-on-demand Signale NVOD so, daß die bereits vorhandenen Fernsehsignale CATV möglichst wenig beeinflußt werden. Das optische Ausgangssignal des Dämpfungsglieds T0 wird über eine weitere optische Übertragungsleitung der optischen Signalverteileinrichtung VER zugeführt. In der optischen Signalverteileinrichtung VER werden die optischen Near-Video-on-demand Signale NVOD mit den optischen Fernsehsignalen CATV verknüpft, um sie gemeinsam über dieselben optischen Übertragungsleitungen zu den mehreren Endstellen zu übertragen. Dabei wird die optische Signalverteileinrichtung VER z.B. im Wellenlängenmultiplex betrieben.

Der Elektrisch/Optisch-Umsetzer E/O3 dient der Umsetzung und Übertragung von Cablephonesignalen CABLE1. Optische Cablephonesignale sind Fernsprechsignale, die über optische Übertragungsleitungen übertragen werden. Die optischen Cablephonesignale CABLE1 werden z.B. bei der Wellenlänge λ₃ ≠ λ₂ ≠ λ₁ über eine optische Übertragungsleitung einem optischen Dämpfungsglied T1 zugeführt, in dem eine Anpassung der Signalpegel erfolgt, vergleichbar dem optischen Dämpfungsglied T0. Anschließend werden die optischen Cablephonesignale CABLE1 über eine weitere optische Übertragungsleitung der optischen Signalverteileinrichtung VER zugeführt. Die Cablephonesignale CABLE1 sollen nur einem Teil der Endstellen zugeführt werden. Daher ist in der optischen Signalverteileinrichtung VER vorgesehen, die Cablephonesignale CABLE1 derart mit den optischen Fernsehsignalen CATV und den optischen Near-Video-on-demand Signalen zu verknüpfen, daß sie nur einem Teil der optischen Übertragungsleitungen am Ausgang der optischen Signalverteileinrichtung VER zugeführt werden, so daß sie nur einen Teil der Optisch/Elektrisch-Umsetzer O/E erreichen. Hierauf wird weiter unten ausführlicher eingegangen. In Fig. 5 ist nur der Vorwärtskanal für die optischen Cablephonesignale dargestellt. Eine Realisierung für den Rückkanal ist beispielsweise der Fig. 3 zu entnehmen.

Der Elektrisch/Optisch-Umsetzer E/O4 dient der Umsetzung und Übertragung von Cablephonesignalen CABLE2. Die optischen Cablephonesignale CABLE2 werden z.B. bei der Wellenlänge λ₃ ≠ λ₂ ≠ λ₁ übertragen. Sie werden dem Teil der Endstellen zugeführt, die nicht bereits durch die Cablephonesignale CABLE1 Zugang zu einem Fernsprechnetz haben. Die optischen Cablephonesignale CABLE2 werden über eine optische Übertragungsleitung, einem optischen Dämpfungsglied T2, dessen Aufgabe ebenfalls eine Anpassung der Signalpegel ist, wie weiter oben zum optischen Dämpfungsglied T0 erläutert, und einer weiteren optischen Übertragungsleitung zur optischen Signalverteileinrichtung VER übertragen. In der optischen Signalverteileinrichtung VER werden die optischen Cablephonesignale CABLE2 derart mit den optischen Fernsehsignalen CATV und den optischen Near-Video-on-demand Signalen NVOD verknüpft, daß sie einerseits nicht mit den optischen Cablephonesignalen CABLE1 überlagert sind und andererseites alle Optisch/Elektrisch-Umsetzer O/E, die von den optischen Cablephonesignalen CABLE1 nicht erreicht werden, erreichen.

Der optischen Signalverteileinrichtung VER können auch noch weitere optische Signale zugeführt werden, auf die nicht näher eingegangen wird. Anstelle der Near-Video-on-demand Signale NVOD und der Cablephonesignale CABLE1 und CABLE2 können auch andere Informationen übertragen werden, beispielsweise Video-on-demand Signale, und somit andere Dienste zur Verfügung gestellt werden. Bei Video-on-demand Signale muß jeder Endstelle ein eigener breitbandiger Übertragungskanal zur Verfügung gestellt werden, was die Anforderung an die Übertragungskapazität erhöht. Die Verwendung der optischen Dämpfungsglieder T0, T1, T2 ist optional und hängt von der optischen Ausgangsleistung der Elektrisch/Optisch-Umsetzer sowie von der Verteiltiefe der jeweiligen Dienste ab. Bei System SYS aus Fig. 5 werden insbesondere unidirektionalen Verteilsignalen (CATV) mit bidirektionale Signale ( CABLE1, CABLE2 ) verknüpft.

Fig. 6 zeigt eine erfindungsgemäße optische Signalverteileinrichtung VER des Systems aus Fig. 5. Die optische Signalverteileinrichtung VER beinhaltet sieben breitbandige optische Splitter Sp1, SP2, SP3, SP4, SP5, Sp6, SP7. Jeder der sieben optischen Splitter SP1 bis SP7 hat zwei Eingänge und zwei Ausgänge. Er dient dazu, zwei unterschiedliche Signale miteinander zu verknüpfen und die verknüpften Signale gleichzeitig beiden Ausgängen zuzuführen. Derartige optische Splitter, die auch als optische Koppler, insbesondere als 2x2-Koppler, bezeichnet werden, sind beispielsweise aus Electronic Letters, 15th August 1985, Vol. 21, No. 17, Seiten 742-743 bekannt. Am optischen Splitter SP1 liegen an dem einen Eingang die optischen Fernsehsignale CATV und am anderen Eingang die optischen Near-Video-on-demand Signale NVOD. Beide Signale werden im optischen Splitter SP1 miteinander verknüpft. Die optischen Fernsehsignale CATV und die optischen Near-Video-on-demand Signale NVOD werden beispielsweise bei den Wellenlängen λ₁ = 1520nm und λ₂ = 1300nm. Beispielsweise liegen die elektrischen Fernsehsignale im Frequenzbereich 100-400 MHz und die elektrischen Near-Video-on-demand Signale im Frequenzbereich 410-800MHz.

Die miteinander verknüpften optischen Fernsehsignale CATV und die optischen Near-Video-on-demand Signale NVOD werden im optischen Splitter SP1 in zwei Signale aufgeteilt und den beiden Splitter-Ausgängen zugeführt. Die beiden Splitter-Ausgangssignale haben denselben Signalpegel und beinhalten sowohl die optischen Fernsehsignale CATV als auch die optischen Near-Video-on-demand Signale NVOD. Dem optischen Splitter SP1 sind sie optischen Splitter SP2 und SP3 nachgeschaltet.

Einem Eingang des optischen Splitter SP2 werden die optischen Signale eines Ausgangs des optischen Splitters SP1 zugeführt. Einem Eingang des optischen Splitter SP3 werden die optischen Signale des anderen Ausgangs des optischen Splitters SP1 zugeführt. Dem anderen Eingang des optischen Splitters SP2 werden die optischen Cablephonesignale CABLE1 zugeführt. Dem anderen Eingang des optischen Splitters SP3 werden die optischen Cablephonesignale CABLE2 zugeführt.

Im optischen Splitter SP2 werden somit die bereits miteinander verknüpften optischen Fernsehsignale CATV und optischen Near-Video-on-demand Signale NVOD zusätzlich mit den optischen Cablephonesignale CABLE1 verknüpft. Jeder Ausgang des optischen Splitters SP2 dient somit zur Übertragung von Signalen, beinhaltend eine Verknüpfung aus optischen Fernsehsignale CATV, optischen Near-Video-on-demand Signale NVOD und optischen Cablephonesignalen CABLE1.

Im optischen Splitter SP3 werden die bereits miteinander verknüpften optischen Fernsehsignale CATV und optischen Near-Video-on-demand Signale NVOD zusätzlich mit den optischen Cablephonesignale CABLE2 verknüpft. Jeder Ausgang des optischen Splitters SP3 dient somit zur Übertragung von Signalen, beinhaltend eine Verknüpfung aus optischen Fernsehsignale CATV, optischen Near-Video-on-demand Signale NVOD und optischen Cablephonesignalen CABLE2.

Dem optischen Splitter SP2 sind sie optischen Splitter SP4 und SP5 nachgeschaltet.

Einem Eingang des optischen Splitter SP4 werden die optischen Signale eines Ausgangs des optischen Splitters SP2 zugeführt. Einem Eingang des optischen Splitter SP5 werden die optischen Signale des anderen Ausgangs des optischen Splitters SP2 zugeführt. Der andere Eingang des optischen Splitters SP4 und der andere Eingang des optischen Splitters SP5 sind hier unbeschaltet. Anstelle von optischen Splittern mit zwei Eingängen und zwei Ausgängen können die optischen Splitter SP4 und SP5 in diesem Beispiel auch als optische Splitter mit einem Eingang und mindestens zwei Ausgängen ausgeführt sein.

Die optischen Splitter SP4 und SP5 dienen dazu, die optischen Fernsehsignale CATV, die optischen Near-Video-on-demand Signale NVOD und die optischen Cablephonesignalen CABLE1 auf mehrere Optisch/Elektrisch-Umsetzer O/E zu verteilen.

Dem optischen Splitter SP3 sind sie optischen Splitter SP6 und SP7 nachgeschaltet.

Für den Aufbau und die Funktion der optischen Splitter SP6 und SP7 gilt dasselbe wie zu den optischen Splittern SP4 und SP5 weiter oben ausgeführt wurde, mit dem Unterschied, daß die optischen Cablephonesignale CABLE1 durch die optischen Cablephonesignale CABLE2 zu ersetzen sind.

Die optischen Fernsehsignale CATV und die optischen Near-Video-on-demand Signale NVOD gelangen in dem hier ausgeführten System SYS zu allen Endstellen, wohingegen die optischen Cablephonesignale CABLE1 und CABLE2 jeweils nur zu einem Teil der Endstellen gelangen. Es ist jedoch jede beliebige Kombination der zusätzlichen Dienste zu den von den CATV-Signalen nicht belegten Eingängen der Signalverteileinrichtung VER denkbar. Dieses Beispiel wurde deshalb so gewählt, da mehr Kanäle für Telefonie als für Near-Video-on-demand benötigt werden :

Bei einer Basisanschlußkonfiguration für jede Endstelle mit zwei Nutzinformationskanälen zu je 64kbit/s und einem Signalisierungskanal mit 16kbit/s sowie einem Steuerkanal mit 16kbit/s, wie aus dem ISDN bekannt, werden für 1000 Endstellen 160 Mbit/s Übertragungskapazität benötigt. Die optischen Cablephonesignale CABLE1 und CABLE2 liefern somit jeweils 1000 Endstellen jeweils einen Kanal mit 160kbit/s, so daß insgesamt 2000 Kanäle für 2000 Endstellen und somit 320Mbit/s Übertragungskapazität benötigt werden.

Für die Übertragung von Videosignalen eines Videofilms werden beispielsweise 8Mbit/s benötigt. An der Einspeisstelle für die Near-Video-on-demand Signale am optischen Splitter SP1 steht im Vergleich zu den optischen Cablephonesignale CABLE1 und CABLE2 beispielsweise die doppelte Übertragungskapazität zur Verfügung, somit 320Mbit/s. Demnach können über 40 Kanäle 40 Near-Video-on-demand Signale zu den insgesamt 2000 Endstellen übertragen werden.

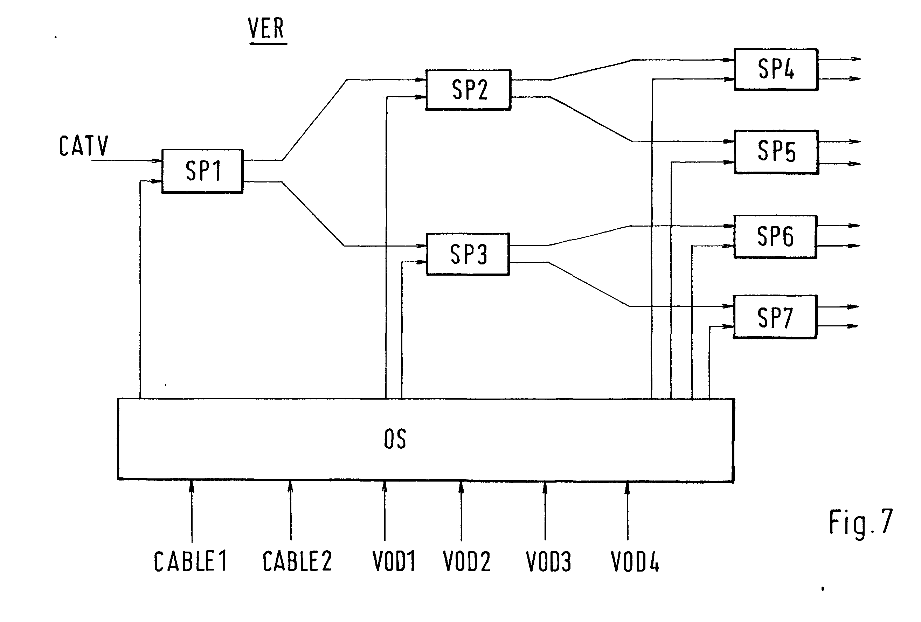

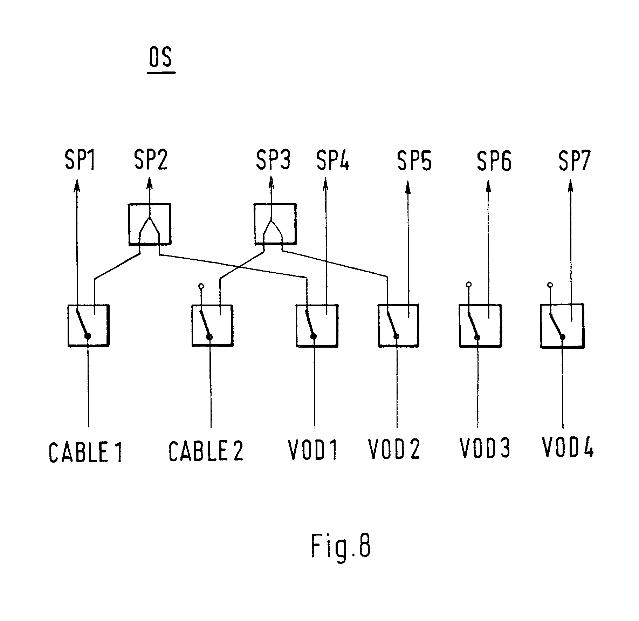

Das fünfte Ausführungsbeispiel wird nun unter Zuhilfenahme der Figuren 7 und 8 erläutert. Fig. 7 zeigt eine weitere erfindungsgemäße optische Signalverteileinrichtung VER des Systems aus Fig. 5. Die optische Signalverteileinrichtung VER beinhaltet wie die optische Signalverteileinrichtung aus Fig. 6 sieben optische Splitter SP1 bis SP7, die in ihrem Aufbau und ihrer Anordnung zueinander denjenigen der Signalverteileinrichtung aus Fig. 6 entsprechen. Zusätzlich beinhaltet die optische Signalverteileinrichtung VER eine optische Schalteinheit OS, die dazu dient, verschiedene Eingangssignale, wie z.B. optische Cablephonesignale CABLE1 oder CABLE2 sowie optische Video-on-demand Signale VOD1, VOD2, VOD3 oder VOD4 wahlweise auf verschiedene Eingänge der optischen Splitter SP1 bis SP7 zu schalten.

Die optische Schalteinheit OS beinhaltet dazu z.B. mehrere optische Schalter und ggf. mehrere optische Combiner, deren Anordnung von der gewünschten Flexibilität des Schaltvermögens der optischen Schalteinheit OS abhängt. Die optischen Combiner dienen z.B. dazu, schon vorab zwei Signale miteinander zu verknüpfen und die verknüpften Signale einem der-Eingänge der optischen Splitter SP1 bis SP7 zuzuführen. Die Ansteuerung der Schalter erfolgt beispielsweise ferngesteuert von einer Zentrale aus über eine separate Ansteuerungsleitung.

Beispiel 1: Die Cablephonesignale CABLE1 werden auf den optischen Splitter SP1 geschaltet und stehen damit allen Endstellen zur Verfügung. Die Video-on-demand Signale VOD1 werden auf den optischen Splitter SP2 geschaltet und stehen damit nur einem Teil der Endstellen zur Verfügung, nämlich demjenigen, der mit den optischen Splittern SP4 und SP5 verbunden ist. Die Video-on-demand Signale VOD2 werden auf den optischen Splitter SP3 geschaltet und stehen damit nur einem Teil der Endstellen zur Verfügung, nämlich demjenigen, der mit den optischen Splittern SP6 und SP7 verbunden ist.

Beispiel 2: Die Cablephonesignale CABLE1 werden auf den optischen Splitter SP2 geschaltet, die Cablephonesignale CABLE2 auf den optischen Splitter SP3. Dies wird z.B. notwendig bei einer Erweiterung des Netzes durch den Anschluß weiterer Endstellen, für die eine erhöhte Übertragungskapazität benötigt wird. Die Video-on-demand Signale VOD1 werden dann z.B. auf den optischen Splitter SP4 geschaltet, die Video-on-demand Signale VOD2 auf den optischen Splitter SP5, die Video-on-demand Signale VOD3 auf den optischen Splitter SP6 und die Video-on-demand Signale VOD4 auf den optischen Splitter SP7.

Beispiel 3: Die Cablephonesignale CABLE1 werden auf den optischen Splitter SP1 geschaltet und stehen damit allen Endstellen zur Verfügung. Die Video-on-demand Signale VOD1 werden auf den optischen Splitter SP2 geschaltet und stehen damit nur einem Teil der Endstellen zur Verfügung, nämlich demjenigen, der mit den optischen Splittern SP4 und SP5 verbunden ist. Die Video-on-demand Signale VOD2 werden auf den optischen Splitter SP6 geschaltet und die Video-on-demand Signale VOD3 auf den optischen Splitter SP7. Dies ist z.B. zur Einsparung von Übertragungskapazität ratsam, wenn die Endstellen, die mit den optischen Splittern SP4 und SP5 verbunden sind im Mittel die gleiche Übertragungskapazität beanspruchen wie die Endstellen, die mit dem optischen Splitter SP6 verbunden sind, die beispielsweise im Mittel eine vergleichbare Übertragungskapazität beanspruchen wie die Endstellen, die mit dem optischen Splitter SP7 verbunden sind. Auf diese Art und Weise lassen sich bedarfsgerecht, abhängig von der Nachfrage Cablephonesignale und Video-on-demand Signale zu Endstellen zuordnen.

Fig. 8 zeigt eine Ausführungsform einer optischen Schalteinheit OS der optischen Signalverteileinrichtung aus Fig. 7. Die optische Schalteinheit OS beinhaltet sechs optische Schalter und zwei optische Combiner. Damit lassen sich alle drei zu Fig. 7 beschriebenen Beispiele realisieren. In Fig. 8 ist das Beispiel 1 realisiert, indem alle Schalterstellungen jeweils auf den linken Ausgang geschaltet sind. Ein weiteres Beispiel wäre die optischen Cablephonesignale CABLE1 und die Video-on-demand Signale VOD1 auf den optische Splitter SP2 zu schalten sowie die optischen Cablephonesignale CABLE2 und die Video-on-demand Signale VOD2 auf den optische Splitter SP3.

Des weiteren sind Kombinationen der Ausführungsbeispiele untereinander möglich sowie Erweiterungen, z.B. Hinzufügungen von zusätzlichen optischen Splittern, um insgesamt einen 1:16 oder 1:32 Splitter zu erhalten. Ebenso können Minimalversionen mit nur drei optischen Splittern oder in einer Minimalversion auch nur ein optischer Splitter verwendet werden.

## Patentansprüche

1. System ( SYS ) zur optischen Übertragung von Informationen von einer Uebertragungsstation ( HUB ) über mehrere optische Übertragungsleitungen zu mehreren optischen Netzabschlußeinheiten ( ONU ), wobei das System ( SYS ) mindestens ein Uebertragungsmittel (K1,..., Km ) zur optischen Übertragung von weiteren Informationen und mindestens einen optischen Koppler (C1, C2, SP1, SP2, SP3, SP4, SP5, SP6, SP7 ) beinhaltet, und wobei die weiteren Informationen eines jeden Uebertragungsmittels ( K1,..., Km ) jeweils über einen optischen Koppler ( C1, C2, SP1, SP2, SP3, SP4, SP5, SP6, SP7 ) in eine optische Übertragungsleitung eingespeist werden, die nur mit einem Teil der mehreren optischen Netzabschlußeinheiten ( ONU ) verbunden ist,
wobei eine optische Signalverteileinrichtung ( VER ) vorgesehen ist, um die Informationen (CATV) und die weiteren Informationen ( CABLE, NVOD, VOD ) zu verknüpfen und sie anschließend gemeinsam zu dem jeweiligen Teil der mehreren optischen Netzabschlußeinheiten ( ONU ) zu übertragen, wobei die optische Signalverteileinrichtung ( VER) mindestens drei optische Koppler ( SP1, SP2, SP3 ) beinhaltet, von denen mindestens zwei ( SP2, SP3 ) zwei Eingänge und zwei Ausgänge aufweisen, die Informationen einem (SP1) der mindestens drei optischen Koppler ( SP1, SP2, SP3 ) zugeführt werden, der mit zwei der mindestens zwei optischen Koppler ( SP2, SP3 ) mit zwei Eingängen verbunden ist, und wobei die weiteren Informationen ( CABLE, NVOD, VOD ) mindestens einem der mindestens zwei optischen Koppler ( SP2, SP3 ) mit zwei Eingängen zugeführt werden, um sie mit den Informationen ( CATV) der Uebertragungsstation ( HUB ) zu verknüpfen, **dadurch gekennzeichnet, daß** eine optische Schalteinheit ( OS) vorgesehen ist, die eingerichtet ist, die Zuordnung der weiteren Informationen ( CABLE, NVOD, VOD ) zu dem mindestens einen Eingang eines der optischen Koppler ( SP1, SP2, SP3 ) zu steuern.

2. System ( SYS ) nach Anspruch 1, **dadurch gekennzeichnet, daß** daß in der Uebertragungsstation ( HUB ) und in dem mindestens einem Uebertragungsmittel (K1,..., Km) jeweils ein Elektrisch/Optisch-Umsetzer ( E/O ) vorgesehen ist, um elektrische Signale in optische umzusetzen, wobei die optischen Signale dieselbe Wellenlänge besitzen, und wobei sich die Frequenzbereiche der elektrischen Signale in der Uebertragungsstation ( HUB ) und in dem mindestens einen Uebertragungsmittel ( K1,..., Km ) derart gewählt sind, daß sie sich nicht überschneiden.

3. System ( SYS ) nach Anspruch 1 oder 2, **dadurch gekennzeichnet, daß** die mehreren optischen Netzabschlußeinheiten ( ONU) zur Übertragung von Informationen über weitere optische Übertragungsleitungen mit dem mindestens einem Uebertragungsmittel ( K1,..., Km) verbunden sind.

4. System ( SYS ) nach Anspruch 3, **dadurch gekennzeichnet, daß** das mindestens eine Uebertragungsmittel ( K1, ..., Km ) mit der Uebertragungsstation ( HUB ) verbunden sind, und daß das mindestens eine Uebertragungsmittel ( K1,..., Km) Mittel zur Aufteilung der von den mehreren optischen Netzabschlußeinheiten ( ONU) empfangenen Informationen und Mittel zur Weiterleitung eines Teils der von den optischen Netzabschlußeinheiten ( ONU) empfangenen Informationen zur Uebertragungsstation ( HUB ) beinhaltet.

5. System ( SYS ) nach Anspruch 1, **dadurch gekennzeichnet, daß** die Uebertragungsstation ( HUB ) eine Kabelfernsehkopfstation ist, die Informationen Fernsehsignale sind und die Kabelfernsehkopfstation über ein optisches Verteilnetz mit mindestens einem optischen Splitter mit den mehreren optischen Netzabschlußeinheiten ( ONU) verbunden ist.

6. System ( SYS ) nach Anspruch 5, **dadurch gekennzeichnet, daß** die weiteren Informationen Fernsprechsignale sind, daß das mintestens eine Uebertragungsmittel (K1, ..., Km ) mit einem Fernsprechnetz ( NET ) und die mehreren optischen Netzabschlußeinheiten ( ONU) jeweils mit einer Gruppe von Endstellen ( END ) verbindbar sind, und daß über jedes Uebertragungsmittel (K1, ..., Km ) Fernsprechsignale zu wenigstens einer Gruppe von Endstellen ( END ) übertragen werden.

7. System ( SYS ) nach den Ansprüchen 4 und 6, **dadurch gekennzeichnet, daß** die von den mehreren optischen Netzabschlußeinheiten ( ONU) zu übertragenden Informationen interaktive Abrufsignale und Fernsprechsignale sind, und daß die interaktiven Abrufsignale zur Uebertragungsstation ( HUB ) und die Fernsprechsignale zum Fernsprechnetz ( NET) übertragen werden.

8. System ( SYS ) nach Anspruch 6, **dadurch gekennzeichnet, daß** das die mehreren optischen Netzabschlußeinheiten ( ONU) zur Unterdrückung von Störungen jeweils mindestens einen Schalter (S1, S2) beinhalten, mittels dessen zumindest ein Teil des Frequenzbereichs, der zur Informationsübertragung zu dem jeweiligen Uebertragungsmittel ( K1,..., Km ) dient, für die Übertragung gesperrt wird, für den Fall, daß in diesem Teil des Frequenzbereichs keine Übertragung stattfinden soll.

9. System ( SYS ) nach Anspruch 8, **dadurch gekennzeichnet, daß** das die mehreren optischen Netzabschlußeinheiten ( ONU) jeweils mindestens zwei Mittel ( BP1, BP2 ) zur Aufteilung des Frequenzbereichs, der zur Informationsübertragung zu dem jeweiligen Uebertragungsmittel ( K1,..., Km ) dient, und eine Steuereinheit ( CTRL ) zur Detektion der Signalpegel in den aufgeteilten Frequenzbereichen und zur Ansteuerung des mindestens einen Schalter ( S1, S2) beinhalten, und daß die Ansteuerung des mindestens einen Schalters ( S1, S2) derart erfolgt, daß für den Fall, daß der entsprechende Signalpegel unterhalb einer vorgegebenen unteren Schwelle oder überhalb einer vorgegebenen oberen Schwelle liegt, der entsprechende Frequenzbereich gesperrt wird.

10. System ( SYS ) nach Anspruch 1, **dadurch gekennzeichnet, daß** die von der Uebertragungsstation ( HUB ) übertragenen Informationen und die von dem mindestens einem Uebertragungsmittel ( K1,..., Km ) übertragenen weiteren Informationen bei unterschiedlichen Wellenlängen übertragen werden.

11. Optische Signalverteileinrichtung ( VER ) eines optischen Übertragungssystems ( SYS) zur Übertragung von mindestens drei unterschiedlichen Informationen ( CATV, CABLE, NVOD), beinhaltend mindestens drei optische Koppler (SP1, SP2, SP3 ), von denen mindestens zwei ( SP2, SP3 ) zwei Eingänge und zwei Ausgänge aufweisen, wobei erste Informationen (CATV) einem ( SP1 ) der mindestens drei optischen Koppler ( SP1, SP2, SP3 ) zugeführt werden, der mit zwei der mindestens zwei optischen Koppler ( SP2, SP3 ) mit zwei Eingängen verbunden ist, wobei zweite Informationen ( CABLE, NVOD, VOD ) mindestens einem ( SP2) der mindestens zwei optischen Koppler ( SP2, SP3 ) mit zwei Eingängen zugeführt werden, um sie mit den ersten Informationen ( CATV) zu verknüpfen, und wobei dritte Informationen ( CABLE, NVOD, VOD ) mindestens einem ( SP3) der mindestens zwei optischen Koppler ( SP2, SP3 ) mit zwei Eingängen zugeführt werden, um sie mit den ersten Informationen ( CATV) zu verknüpfen
**dadurch gekennzeichnet, daß** eine optische Schalteinheit ( OS ) vorgesehen ist, die eingerichtet ist, um die Zuordnung der zweiten und dritten Informationen ( CABLE, NVOD, VOD ) zu dem mindestens einen Eingang eines der optischen Koppler ( SP1, SP2, SP3 ) zu steuern.

## Claims

1. A system (SYS) for optically transmitting information from a transmission station (HUB) over a plurality of optical transmission lines to a plurality of optical network units (ONU), the system (SYS) comprising at least one transmission means (K1, ..., Km) for optically transmitting further information and at least one optical coupler (C1, C2, SP1, SP2, SP3, SP4, SP5, SP6, SP7), the further information of each of the transmission means (K1, ..., Km) being fed via a respective one of the optical couplers (C1, C2, SP1, SP2, SP3, SP4, SP5, SP6, SP7) into an optical transmission line connected to only part of the plurality of optical network units (ONU), the system (SYS) further comprising an optical signal distribution unit (VER) for combining the information (CATV) and the further information (CABLE, NVOD, VOD) and then transmitting it together to the respective part of the plurality of optical network units (ONU), the optical signal distribution unit (VER) comprising at least three optical couplers (SP1, SP2, SP3), at least two (SP2, SP3) of which have two input ports and two output ports, the information being fed to one (SP1) of the at least three optical couplers (SP1, SP2, SP3) which is connected to two of the at least two optical couplers (SP2, SP3) with two input ports, and the further information (CABLE, NVOD, VOD) being fed to at least one of the at least two optical couplers (SP2, SP3) with two input ports in order to combine it with the information (CATV) from the transmission station (HUB), **characterized in that** an optical switching unit (OS) is provided which is adapted to control the assignment of the further information (CABLE, NVOD, VOD) to the at least one input port of one of the optical couplers (SP1, SP2, SP3).

2. A system (SYS) as claimed in claim 1, **characterized in that** the transmission station (HUB) and the at least one transmission means (K1, ..., Km) each comprise an electrical-to-optical converter (E/O) for converting electric signals to optical signals, with the optical signals having the same wavelength and with the frequency ranges of the electric signals in the transmission station (HUB) and in the at least one transmission means (K1, ..., Km) chosen so as not to overlap.

3. A system (SYS) as claimed in claim 1 or 2, **characterized in that** the plurality of optical network units (ONU) are connected to the at least one transmission means (K1, ..., Km) by further optical transmission lines for the transmission of information.

4. A system (SYS) as claimed in claim 3, **characterized in that** the at least one transmission means (K1, ..., Km) is connected to the transmission station (HUB) and comprises means for separating the information received from the plurality of optical network units (ONU) and means for routing part of the information received from the optical network units (ONU) to the transmission station (HUB).

5. A system (SYS) as claimed in claim 1, **characterized in that** the transmission station (HUB) is a cable television head end, that the information consists of television signals, and that the cable television head end is connected to the plurality of optical network units (ONU) by an optical distribution network with at least one optical splitter.

6. A system (SYS) as claimed in claim 5, **characterized in that** the further information consists of telephone signals, that the at least one transmission means (K1, ..., Km) is connectable to a telephone network (NET), that each of the plurality of optical network units (ONU) is connectable to a respective group of customer locations (END), and that through each of the transmission means (K1, ..., Km), telephone signals are transmitted to at least one group of customer locations (END).

7. A system (SYS) as claimed in claims 4 and 6, **characterized in that** the information to be transmitted by the plurality of optical network units (ONU) consists of interactive request signals and telephone signals, and that the interactive request signals and the telephone signals are transmitted to the transmission station (HUB) and the telephone network (NET), respectively.

8. A system (SYS) as claimed in claim 6, **characterized in that** in order to suppress interference, each of the plurality of optical network units (ONU) comprises at least one switch (S1, S2) by means of which at least a subdivision of the frequency band used to transmit information to the respective transmission means (K1, ..., Km) is blocked if no transmission is to take place in said subdivision of the frequency band.

9. A system (SYS) as claimed in claim 8, **characterized in that** each of the plurality of optical network units (ONU) comprises at least two means (BP1, BP2) for separating the frequency band used to transmit information to the respective transmission means (K1, ..., Km) and a control unit (CTRL) for detecting the signal levels in the separated frequency bands and for controlling the at least one switch (S1, S2), and that the at least one switch (S1, S2) is controlled in such a way that, if the respective signal level is below a preset lower threshold or above a preset upper threshold, the respective frequency band will be blocked.

10. A system (SYS) as claimed in claim 1, **characterized in that** the information transmitted by the transmission station (HUB) and the further information transmitted by the at least one transmission means (K1, ..., Km) are transmitted at different wavelengths.

11. An optical signal distribution unit (VER) of an optical transmission system (SYS) for transmitting at least three different types of information (CATV, CABLE, NVOD), comprising at least three optical couplers (SP1, SP2, SP3), at least two (SP2, SP3) of which have two input ports and two output ports, a first type of information (CATV) being fed to one (SP1) of the at least three optical couplers (SP1, SP2, SP3) which is connected to two of the at least two optical couplers (SP2, SP3) with two input ports, a second type of information (CABLE, NVOD, VOD) being fed to at least one (SP2) of the at least two optical couplers (SP2, SP3) with two input ports in order to combine it with the first type of information (CATV), and a third type of information (CABLE, NVOD, VOD) being fed to at least one (SP3) of the at least two optical couplers (SP2, SP3) with two input ports in order to combine it with the first type of information (CATV),
**characterized in that** an optical switching unit (OS) is provided which is adapted to control the assignment of the second and third types of information (CABLE, NVOD, VOD) to the at least one input port of one of the optical couplers (SP1, SP2, SP3).

## Revendications

1. Système (SYS) pour la transmission optique d'informations d'une station de transmission (HUB) au moyen de plusieurs lignes de transmission optique à plusieurs unités optiques de terminaison de réseau (ONU), le système (SYS) contenant au moins un moyen de transmission (K1, ..., Km) pour la transmission optique d'autres informations et au moins un coupleur optique (C1, C2, SP1, SP2, SP3, SP4, SP5, SP6, SP7), et les autres informations de chaque moyen de transmission (K1, ..., Km) étant injectées respectivement au moyen d'un coupleur optique (C1, C2, SP1, SP2, SP3, SP4, SP5, SP6, SP7) dans une ligne de transmission optique, qui n'est reliée qu'à une partie des plusieurs unités optiques de terminaison de réseau (ONU), un dispositif optique de répartition de signal (VER) étant prévu, afin de combiner les informations (CATV) et les autres informations (CABLE, NVOD, VOD) et les transmettre ensuite ensemble à la partie respective des plusieurs unités optiques de terminaison de réseau (ONU), le dispositif optique de répartition de signal (VER) comprenant au moins trois coupleurs optiques (SP1, SP2, SP3), dont au moins deux (SP2, SP3) présentent deux entrées et deux sorties, les informations étant amenées à un (SP1) des au moins trois coupleurs optiques (SP1, SP2, SP3), qui est relié à deux des au moins deux coupleurs optiques (SP2, SP3) avec deux entrées, et les autres informations (CABLE, NVOD, VOD) étant amenées à au moins un des au moins deux coupleurs optiques (SP2, SP3) avec deux entrées, afin de les combiner avec les informations (CATV) de la station de transfert (HUB), **caractérisé en ce qu'**il est prévu une unité de commutation optique (OS) qui est aménagée pour commander l'attribution des autres informations (CABLE, NVOD, VOD) à au moins une entrée des coupleurs optiques (SP1, SP2, SP3).

2. Système (SYS) selon la revendication 1, **caractérisé en ce qu'**il est prévu dans la station de transfert (HUB) et dans le au moins un moyen de transfert (K1, ..., Km) respectivement un convertisseur électrique/optique (E/O) pour convertir des signaux électriques en signaux optiques, les signaux optiques présentant la même longueur d'onde, et les plages de fréquences des signaux électriques étant choisies dans la station de transfert (HUB) et dans le au moins un moyen de transmission (K1, ..., Km) de telle sorte qu'ils ne se recoupent pas.

3. Système (SYS) selon la revendication 1 ou 2, **caractérisé en ce que** les plusieurs unités optiques de terminaison de réseau (ONU) sont reliées pour la transmission d'informations au moyen d'autres lignes de transmission optique à le au moins un moyen de transmission (K1,..., Km).

4. Système (SYS) selon la revendication 3, **caractérisé en ce que** le au moins un moyen de transmission (K1, ..., Km) est relié à la station de transfert (HUB) et **en ce que** le au moins un moyen de transmission (K1, ..., Km) contient des moyens pour la répartition des informations reçues des plusieurs unités optiques de terminaison de réseau (ONU) et des moyens pour la transmission d'une partie des informations reçues des unités optiques de terminaison de réseau (ONU) à la station de transfert (HUB) .

5. Système (SYS) selon la revendication 1, **caractérisé en ce que** la station de transfert (HUB) est une station de tête de télévision par câble, les informations sont des signaux de télévision et la station de tête de télévision par câble est reliée par un réseau répartiteur optique à au moins un séparateur optique avec les plusieurs unités optiques de terminaison de réseau (ONU).

6. Système (SYS) selon la revendication 5, **caractérisé en ce que** les autres informations sont des signaux téléphoniques, **en ce que** le au moins un moyen de transmission (K1, ..., Km) peut être lié à un réseau téléphonique (NET) et les plusieurs unités optiques de terminaison de réseau (ONU) peuvent être reliées chacune à un groupe de stations terminales (END) et **en ce que** des signaux téléphoniques sont transmis au moyen de chaque moyen de transmission (K1, ..., Km) à au moins un groupe de stations terminales (END).

7. Système (SYS) selon les revendications 4 et 6 , **caractérisé en ce que** les informations à transmettre par les plusieurs unités optiques de terminaison de réseau (ONU) sont des signaux d'appel interactif et des signaux téléphoniques, et **en ce que** les signaux d'appel interactifs sont transmis à la station de transfert (HUB) et les signaux téléphoniques au réseau téléphonique (NET).

8. Système (SYS) selon la revendication 6, **caractérisé en ce que** les plusieurs unités de terminaison de réseau (ONU) contiennent pour la suppression des parasites respectivement au moins un commutateur (S1, S2), au moyen duquel au moins une partie de la plage de fréquences, qui sert à la transmission d'information au moyen de transmission (K1, ..., Km) respectif, est bloquée pour la transmission dans les cas où aucune transmission ne doit avoir lieu dans cette partie de la plage de fréquences.

9. Système (SYS) selon la revendication 8, **caractérisé en ce que** les plusieurs unités optiques de terminaison de réseau (ONU) contiennent respectivement au moins deux moyens (BP1, BP2) pour la répartition de la plage de fréquences, qui sert à la transmission d'information au moyen de transmission respectif (K1, ..., Km), et une unité de commande (CTRL) pour la détection des niveaux de signal dans les plages de fréquences réparties et pour l'activation du au moins un interrupteur (S1, S2) et **en ce que** l'activation du au moins un interrupteur (S1, S2) se fait de telle sorte, dans le cas où le niveau de signal correspondant est situé au-dessous d'un seuil inférieur prédéfini ou au-dessus d'un seuil supérieur prédéfini, la plage de fréquences correspondante est bloquée.

10. Système (SYS) selon la revendication 1, **caractérisé en ce que** les informations transmises par la station de transfert (HUB) et les autres informations reçues transmises par le au moins un moyen de transfert (K1, ..., Km) sont transmises avec différentes longueurs d'onde.

11. Dispositif optique de répartition de signal (VER) d'un système de transmission optique (SYS) pour la transmission d'au moins trois informations différentes (CATV, CABLE, NVOD), comprenant au moins trois coupleurs optiques (SP1, SP2, SP3), dont au moins deux (SP2, SP3) présentent deux entrées et deux sorties, des premières informations (CATV) étant amenées à un (SP1) des au moins trois coupleurs optiques (SP1, SP2, SP3), qui est relié à deux des au moins deux coupleurs optiques (SP2, SP3) avec deux entrées, des secondes informations (CABLE, NVOD, VOD) étant amenées à au moins un (SP2) des au moins deux coupleurs optiques (SP2, SP3) avec deux entrées, afin de les combiner avec les premières informations (CATV), et des troisièmes informations (CABLE, NVOD, VOD) étant amenées à au moins un (SP3) des au moins deux coupleurs optiques (SP2, SP3) avec deux entrées, afin de les combiner avec les premières informations (CATV), **caractérisé en ce qu'**il est prévu une unité de commutation optique (OS) afin de commander l'attribution des secondes et troisièmes informations (CABLE, NVOD, VOD) à la au moins une entrée d'un des coupleurs optiques (SP1, SP2, SP3).
